(19) Europäisches Patentamt
European Patent Office
Office européen des brevets

(11) **EP 2 439 907 A1**

(12) **EUROPEAN PATENT APPLICATION**

(43) Date of publication:
**11.04.2012 Bulletin 2012/15**

(51) Int Cl.:
***H04L 29/08*** *(2006.01)*

(21) Application number: **10305999.4**

(22) Date of filing: **20.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Thomson Licensing**
**92130 Issy-les-Moulineaux (FR)**

(72) Inventors:
• **Van Kempen Alexandre**
**92443, Issy-Les-Moulineaux (FR)**

• **Le Merrer, Erwan**
**92443, Issy-Les-Moulineaux (FR)**
• **Straub, Gilles**
**92443, Issy-Les-Moulineaux (FR)**

(74) Representative: **Le Dantec, Claude**
**Technicolor**
**1-5 rue Jeanne d'Arc**
**92130 Issy-les-Moulineaux (FR)**

(54) **Method of data storing in a distributed data storage system and corresponding device**

(57) The present invention generally relates to distributed data storage systems. In particular, the present invention relates to a method of data placement in a distributed data storage system that combines high data availability with a low impact on network and data storage resources, in terms of bandwidth needed for exchange of data between network nodes and in terms of number of network nodes needed to store an item of data.

**Fig. 7**

**Description**

**1. Field of invention.**

The present invention generally relates to distributed data storage systems. In particular, the present invention relates to a method of data placement in a distributed data storage system that combines high data availability with a low impact on network and data storage resources, in terms of bandwidth needed for exchange of data between network nodes and in terms of number of network nodes needed to store an item of data.

**2. Technical background.**

With the rapidly spreading deployment of mass data handling devices, such as video and image handling devices, reliable storage of huge amounts of data is required, for direct storage or as part of backup storage. As more and more devices are provided with network connectivity, distributed storage of data in network connected devices is considered as a cost effective solution. In such distributed data storage systems that can be deployed over non-managed networks such as on the Internet, methods have been developed that copy a same item of data to multiple network connected devices to ensure data availability and resilience to data loss. This is called data replication. Data replication has to be taken in a broad sense, and covers mere data duplication as well as usage of coding techniques such as erasure or regenerating codes (where encoded data is placed on storage devices for resilience). To cope with a risk of permanent data loss due to device failure or temporary data loss due to temporary device unavailability, a high replication factor (i.e. a high number of copies) is wished. However, to reduce costs in terms of communication and storage size needed (so-called replication costs) it is rather wished to have a low replication factor.
What is needed is a solution that achieves high level of data availability of distributed data storage that jointly considers availability requirements and replication costs.

**3. Summary of the invention.**

The present invention aims at alleviating some of the inconveniences of prior art.
In a large-scale distributed data networks such as peer-to-peer networks, devices join and leave the network continuously. Each device has its own disconnection and connection behavior. Certain devices are for example always connected, while others are only connected during the day, and disconnected during the night, while others have a more random connection behavior.
For peer-to-peer networks that are based on Internet connection gateways, the gateways provided by telecommunication operators to subscribers of their services are considered as peers, which subscribers are free to switch off during nighttime or during absence.
As a peer or device in a distributed data storage system is switched off or fails, the data that it stores is no longer available. If all devices that store a particular item of data are switched off or fail, the data item is no longer available, and the data item is considered being lost for at least the time that the switched off devices are switched on again, or are respectively repaired. During this time, the availability of the stored data is thus not ensured. Increasing the data replication factor is a possible solution to this problem, but highly impacts data storage costs in terms of data communication and data storage size needed.
The objective of the current invention is to optimize the tradeoff between replication factor and storage cost for a given (desired) availability while taking into account a certain equity in distribution of the data over the devices that are part of the distributed data storage system (load balancing).
For this, the invention proposes a selection of a device set for data replication that is based on knowledge of the availability of devices. According to a particular embodiment of the invention, this availability knowledge is acquired by monitoring of the network by the network devices or by only some network devices themselves. According to a variant embodiment, this knowledge is acquired by measurement on connections to the distributed data storage network acquired from one of the network's servers, such as an Internet server. The method of acquiring the availability knowledge is either active or passive, an example of an active method is through usage of 'ping' messages, and an example of a passive method is using connection logs stored by a centralized server of the distributed data storage system. A device is considered being unavailable when it is disconnected, either temporarily or permanently due to a breakdown.
In order to optimize data storing in a distributed data storage system, the invention proposes a method of data storing in a distributed data storage system that comprises network devices that are at least used as storage devices. That the devices are at least used as storage devices means that the devices are used as storage devices for the distributed storage network, but can also be used at a same time for other purposes, such as reception of audio and video programs. As an example, the devices may be Set Top Boxes for reception of audio and video programs, or gateways giving access to an external network, personal computers, or handheld mobile devices. The method comprises a step of reception of a request to store a data item in the distributed data storage system, a step of first selection of one of the network devices as a reference network device, and a step of second selection of at least one network device that has an availability over a predetermined time period that is anti-correlated to an availability determined for the reference network device, and adding of the at least one selected network device to the replication set for storing of the data item, and a step of storage of the data item on the network devices in the replication set.

According to a variant embodiment, the method comprises a repetition of the first selection step and the second selection step until a number of devices in the replication set is equal or superior to a predetermined replication factor k. The predetermined replication factor being the predetermined number of devices that are used to store the data item. If erasure codes are used to store a data item, k is a number of devices that allows to retrieve the data item. If mere data replication is used to store a data item, k is a number of devices that holds a same copy of the data item. In both cases, k is a number of devices that is considered to be sufficient in order to ensure resilience of the data item.

According to a variant embodiment, the method comprises a third selection of a network device to be added to the replication set that has an availability over the predetermined time period that is correlated to an availability determined for the reference network device and repetition of the third selection step until a number of devices in said replication set is equal or superior to a predetermined replication factor k.

According to a variant embodiment, the availability is stored as a vector of which each element is representative of a unit of time, and a number of elements of the vector is representative of a time span, and each element value is representative of an availability during the unit of time of a network device to which the vector is associated, a first predetermined element value being representative of availability, and a second predetermined element value being representative of unavailability.

According to a variant embodiment, the first predetermined element value is a positive predetermined value, and the second predetermined value is a negative predetermined value, and the correlation and the anti-correlation are determined according to a calculation of an angle between two of the vectors, two vectors being highly correlated when the angle approaches zero, and two vectors being highly anti-correlated when the angle approaches $\pi$, the value of the angle being representative of a level of anti-correlation.

According to a variant embodiment, the angle is calculated according to:

$$\theta = \arccos\left(\frac{\vec{x} \cdot \vec{y}}{\|\vec{x}\| \cdot \|\vec{y}\|}\right)$$

where $\theta$ is the angle, and x and y are the two vectors.

According to a variant embodiment, the first predetermined element value is a binary one, and the second predetermined value is a binary zero, and the correlation and the anti-correlation are determined through a calculation of a logical Boolean XOR operation between two of the vectors, two vectors being highly anti-correlated when a result of the logical Boolean XOR operation comprises a high number of 1's that approaches the number of the elements of each of the two vectors, and two vectors (24) being highly correlated when the result of the logical Boolean XOR operation comprises a number of 1's that approaches 0, the number of 1's in the result of the Boolean XOR operation being representative of a level of anti-correlation.

According to a variant embodiment, the reference network device is selected randomly from said network devices.

According to a variant embodiment, the reference network device is selected deterministically from said network devices. As an example, a round-robin selection is a deterministic selection.

In order to optimize data storing in a distributed data storage system, the invention also comprises a device for data storing in a distributed data storage system that comprises network devices that are at least used as storage devices, the device comprising a receiver for receiving of a request to store a data item in the distributed data storage system, a selector for a first selection of one of the network devices as a reference device, a selector for a second selection of at least one network device that has an availability over the predetermined time period that is anti-correlated to an availability determined for the reference network device, and means for adding of the at least one selected network device to the replication set for storing of the data item, and storage means for storing of the data item on the network devices in the replication set.

## 4. List of figures.

More advantages of the invention will appear through the description of particular, non-restricting embodiments of the invention.

The embodiments will be described with reference to the following figures:

Figure 1 shows a distributed storage network architecture suited for implementing a particular variant of the invention;

Figure 2 shows a variant embodiment of the invention where availability data on a device or distributed storage device such as of one of the devices 10-16 of figure 1 are stored in an n-dimensional array that represents a mathematical vector structure.

Figure 3 shows the availability of two devices related to a 24h timeline 35.

Figure 4 illustrates a specific embodiment of the invention comprising 4 replicating devices.

Figure 5 shows a graph where the performance of the invention is compared to the performance of a prior art solution where replication devices are selected randomly.

Figure 6 shows an example embodiment of a device implementing the method of the invention.

Figure 7 shows an algorithm implementing a particular embodiment of the method of the invention, implemented for example by one of the devices 10-16 of figure 1.

## 5. Detailed description of the invention.

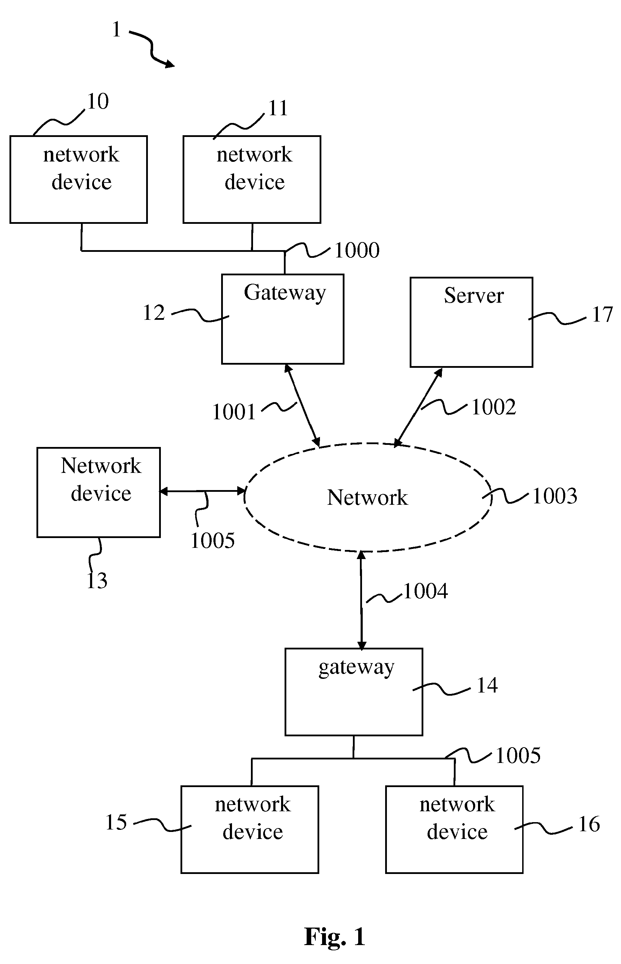

**Figure 1** shows a distributed storage network architecture suited for implementing a particular variant of the invention. The figure shows an network 1003 to which are connected a gateway 12, connecting network devices 10 and 11 to network 1003, a server 17, another gateway 14 which connects network devices 15 and 16 to network 1003, and a network device 13 directly connected to network 1003. All or only some of devices 10-16 can be considered as being distributed storage devices in the distributed storage network according to their capacity to store data and according to membership of the distributed storage network.

Other types of networks than illustrated in figure 1 are compatible with the invention. For example, networks comprising one or more network switching nodes or networks comprising one or more subnetworks, and networks connecting wireless network devices.

The invention can be implemented in any type of network device, such as a home gateway connecting a home network to the internet, a web server, a video server, or a wireless device, handheld or not.

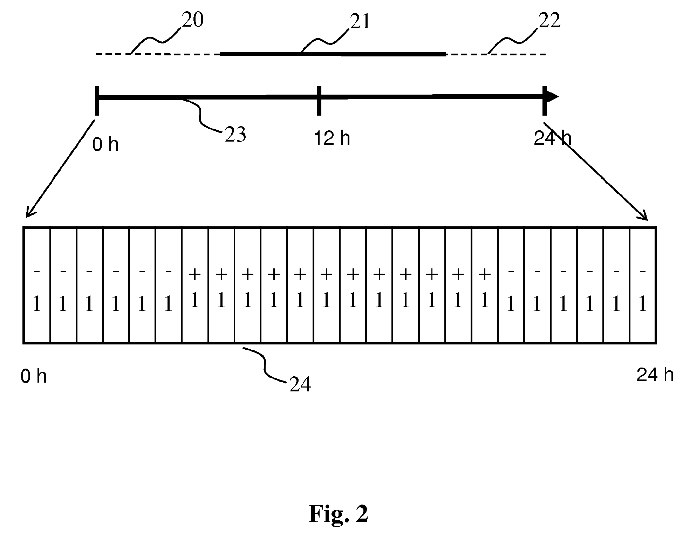

**Figure 2** shows a particular embodiment of the invention where availability data on a peer or distributed storage device such as of one of the devices 10-16 are stored in an n-dimensional array that represents a mathematical vector structure. The horizontal line 20-21-22 represents the availability of the distributed storage device related to a timeline 23. Structure 24 represents the n-dimensional vector. According to the specific embodiment illustrated here, n=24, for 24 hours, also referred hereafter as sample period. Dotted lines 20 and 22 represent moments or time laps on the 24h timeline 23 when distributed storage device cannot be accessed, for example because the device is switched off, i.e. the device is unavailable. Continuous line 21 represents a moment or time lap on timeline 23 when the data on the distributed storage device can be accessed, i.e. the device is available. According to the variant embodiment, the knowledge on the availability of the devices is divided in one hour samples, referred hereafter as sample time. Each sample corresponds to a specific hour on a 24 hour time scale. According to a particular embodiment of the invention, for each hour, the corresponding index of the vector is set to a positive predetermined value +1 if the device has been available during that hour (i.e. if it was connected to the network, or, according to a variant if its data was accessible). The corresponding index is set to a negative predetermined value if the device was not available over the sample period, such as -1. Of course, the sample time of 1 hour and the sample period of 24 are mere examples that illustrate the invention principles; other sample times and periods are possible and have their different advantages and disadvantages when compared. The vector has for example a dimension of 24, enough to store availability data for one day, or 24*7 for seven days. The determination of a sample time and period is part of a tradeoff between the network resources used (for calculation and communication) and the preciseness of the data.

According to a variant embodiment, the sample time and/or sample period are predetermined. According to a more advantageous embodiment, the sample time and period are determined after measurements on connectivity behavior of the distributed data storage devices Then, the best sample time and sample period can be determined from these measurements that captures best recurrent periods of unavailability of devices. For example, a recurrency may be observed when the sample period is set to one week, so as to comprise recurrent day/night and weekend availability/ unavailability alternations. According to a variant embodiment, the distributed storage devices can execute the task of determining a good sample time and period in a collaborative manner, thereby relieving a centralized server from this task.

Thus, each device has its own availability vector, according to a common format, such as the previous described format. According to a variant embodiment, each device stores its own availability vector. This variant has the advantage to avoid centralized monitoring of device availability and reduces the need for communication between devices and the centralized availability storage.

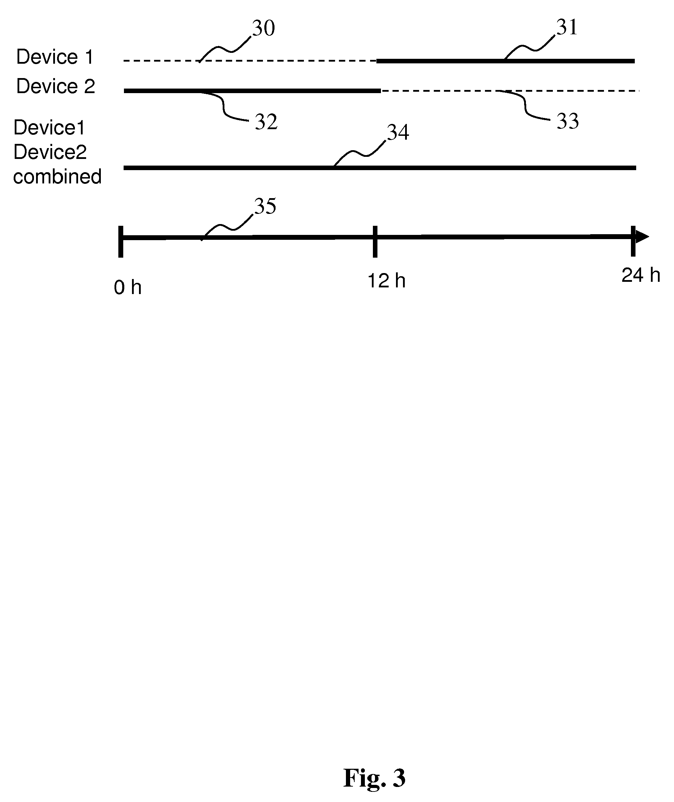

The objective is now to build a devices set that, when data is replicated over the replication set, ensures availability of the data through availability of at least one device of the set over the whole sample period. An example is illustrated in **Figure 3**. The figure shows the availability of a device 1 (30-31) and a device 2 (32-33) related to a 24h timeline 35. Dotted lines 30 and 33 indicate that the devices are not available. Continuous lines 31 and 32 indicate that the devices are available. Line 34 shows that when a device set is chosen that includes device 1 and device 2, the availability of the data item is 100%, and the device set is thus a good replication set. According to a variant embodiment of the invention, in order to determine a good replication set, the invention comprises measurement of the angle between availability vectors of the devices from which the replication set is to be chosen, according to the following formula:

$$\theta = \arccos\left(\frac{\vec{x} \cdot \vec{y}}{\|\vec{x}\| \cdot \|\vec{y}\|}\right)$$

This formula gives a value for the angle θ between a vector x and a vector y. When the angle approaches 0, the vectors are correlated. When the angle approaches π, the vectors are anti-correlated. Two anti-correlated vectors represent two devices that have opposite behavior, for example a device that is uniquely available during the day, whereas the other is uniquely available during the night. Then, for a given device with a given availability vector, if we select for a replication set at least one device having an availability vector that is most correlated with the given device and at least one device having an availability vector that is most anti-correlated with the given device, the sample period is covered with better performance than prior-art methods of random selection of devices to comprise a replication set. According to prior art, an equivalent or even lower level of availability is obtained by increasing the number of devices in the replication set.

According to a variant embodiment of the invention, correlated and anti-correlated devices are not detected as previously described by an angle between vectors, but rather through logical binary operations. Like for the previous described variant embodiment, a device's availability data is translated in a vector where each index represents a sample time, for example 1 h, and the vector length represents a sample period for example 24h. But where the vector is filled with +1 or -1 according to the previous variant embodiment, in the current described variant embodiment the vector is filled with zeros and ones, a 0 indicating unavailability during the sample time and a 1 indicating availability during the sample time. For example:

Device i:                          010110010010010100100100
Perfect anti-correlated device:    101001101101101011011011

According to this variant embodiment, a perfectly anti-correlated device of a device i is a device that has logical 1's where device i has 0's and 0's where device i has 1's. According to this variant embodiment, a selection between anti-correlated devices is done through comparing the results of a logical XOR operation between availability vector of a device i and the availability vectors of candidates for anti-correlation. The more 1's the results of the XOR operation comprises, the more the devices are anti-correlated. This method results in filling up the gaps in the availability of the reference device i with devices that minimize their overlap in availability with device i. As the previously described variant embodiment based on measurement on angle between vectors, this variant embodiment distributes the data well over the distributed data storage system rather than resulting in poor distribution of data over a limited selection of devices that are available over the sample period without interruption, which has an advantage of a better spreading of risks of grouped data loss through the differentiation of the devices that are included in replication sets associated to different data items. Like with the previously described 'angle' variant embodiment where a measured angle is representative of the level of anti-correlation, the current described variant the number of 1's in the result of the XOR operation between the availability vectors of two devices is a measure for the level of anti-correlation. For example, if the vectors comprise 24 elements, twenty-four 1's represents the highest possible (perfect) level of anti-correlation, and zero 1's represents the lowest possible level of anti-correlation. Intermediate numbers are representative of intermediate levels of anti-correlation. Of course, the levels of anti-correlation can be scaled to any given scale, for example on a scale from 1 to 10 through applying simple arithmetic operations.

Of course, the above variant embodiments of the invention supposes a certain predictability of the availability behavior of the devices, since the embodiments use availability data measured in the past. However, tests have proven that in practice, the availability behavior of devices is rather cyclic, for example over a 24h period or over a 7 day period. When the availability behavior of the devices is rather unpredictable, the method of the invention still obtains availability that is as good as pure random selection methods of storage devices, because each reference device i, as has been mentioned, is selected randomly.

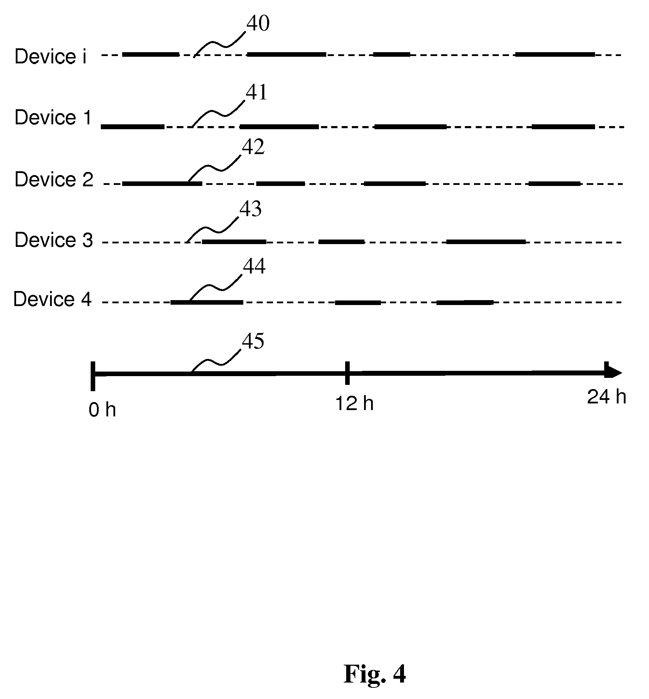

**Figure 4** illustrates a specific embodiment of the invention, with the help of an example for 4 replicating devices. According to this variant embodiment, for a given device i (40), used as a reference, two devices 1 (41) and 2 (42) are selected with availability vectors that correlate best with the availability vector of the reference device i (40) and two devices 3 (43) and 4 (44) are selected with availability vectors that best anti-correlated with the availability vector of the reference device i (40). The benefit of choosing devices with anti-correlated availability behavior resides in the fact that the anti-correlated devices fill up the gaps left by the temporal zones during which the device i (40), and thus the devices 1 and 2 correlated to i, is unavailable. The data is replicated on the selected devices 1-4. This variant embodiment of the invention is referred hereafter as the 'group' variant: a device j wishes to store an item of data enters the storage network that has a replication factor k; the device n selects randomly a device i (reference device). The device j, or according to yet another variant embodiment, reference device i, or according to a variant embodiment a server selects a certain number of devices correlated with device i and a certain number of devices anti-correlated with device i (the 'certain number' being dependent on the desired replication factor k), and copies the data item on these devices to attain the desired replication factor k. According to the above example, the replication factor k = 4; the data item is copied on each of four storage devices.

According to another variant embodiment, further referred to as the 'patching' variant, instead of selecting a certain number of correlated devices and a certain number of anti-correlated devices, a single anti-correlated device with i is chosen. The data item is copied on these devices; if k > 2, the process is repeated with the selection of a 'new' reference device i and search for a new device that is anti-correlated with i, and copying of the data item on these devices. The process is repeated until k is attained.

Both variants are an improvement to prior art, and the 'group' variant is particularly suited for having always t encoded blocks among n (for reasonable values of n), which is very well adapted to erasure codes for example, which require the availability of t erasure code blocks among n in order to cope with a failure. The 'patching' variant is more efficient to keep continuously at least one copy of a data item available, because the 'group' variant can at times result in some temporal gaps, i.e. gives a lesser guarantee than the patching variant that there is always at least one device available that stores a given item of data.

As mentioned above, according to a variant embodiment of the invention, when a device "j" enters the distributed data storage system to store data, the system determines a reference device "i" that will serve as a basis for determination of the replication set comprising correlated and anti-correlated devices. According to a variant embodiment discussed above, the reference device "i" is chosen randomly by a central server in the network. According to another variant embodiment, the reference device "i" is determined in a deterministic manner, so as to be sure not to more than once a same reference device, and thus resulting in a better distribution of data over the network. According to yet another particular embodiment of the invention, both variants are combined, so as to choose randomly a reference device i from a set of devices in which previously selected reference devices are excluded, resulting in an even better distribution of data over the distributed data storage network.

According to a variant embodiment of the invention, the number of replicas is dependent on the capacity of the replication set to "cover" a whole sample period. According to this variant, the steps of finding anti-correlated devices with the resulting availability of the already chosen device set are repeated until there is no more gap in availability.

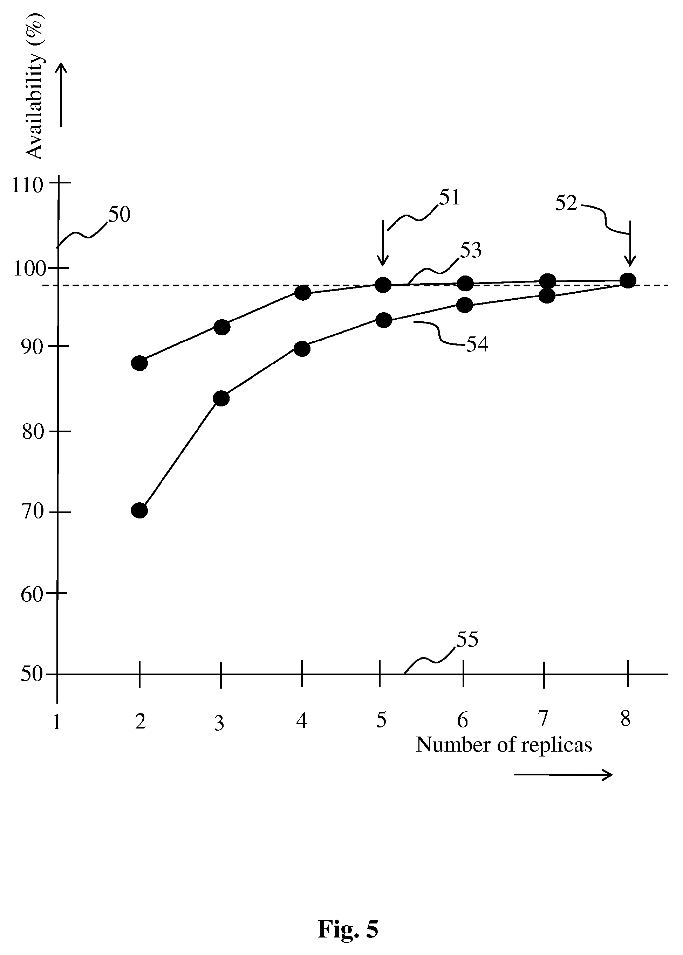

**Figure 5** shows a graph where the performance of the invention is compared to the performance of a prior art solution where devices for replication of a data item are selected randomly. The graph is based on simulation data. As can be seen, in order to obtain an availability of 98%, a prior art random replication set employs 8 devices (graph 54, point 52), whereas with the method of the invention, only 5 devices are needed (graph 53, point 51).

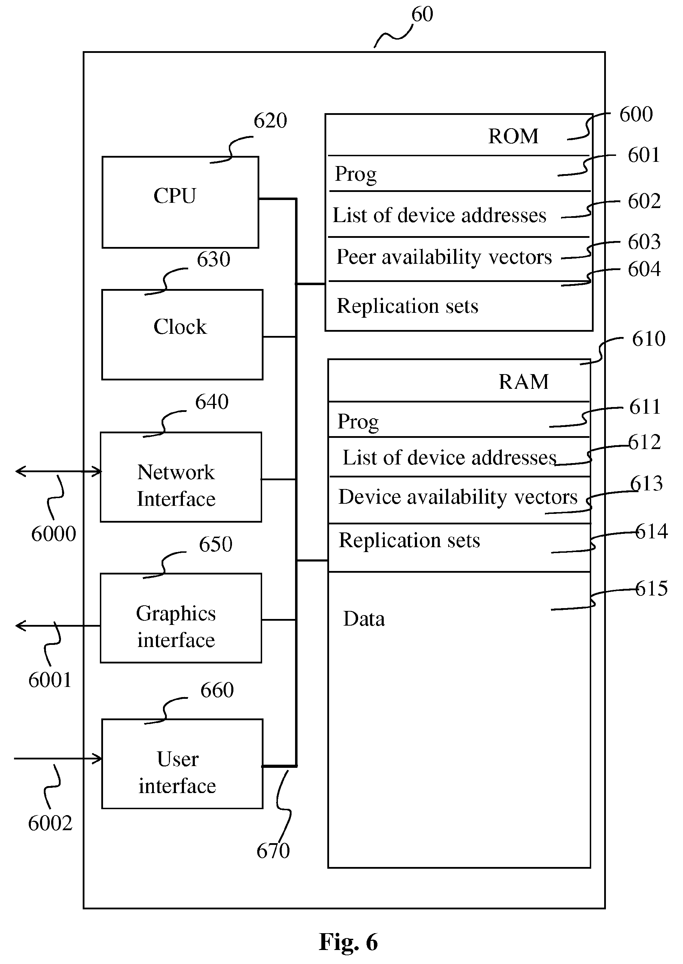

**Figure 6** illustrates a device capable of implementing the invention according to a specific embodiment. The device can be a device implementing a particular variant of the invention or a particular centralized device implementing a particular variant of the invention, such as a server, dedicated or not to implementing a particular variant of the invention.

The device 60 comprises a Read-Only Memory (ROM) 600, a Random Access Memory (RAM) 610, a Central Processing Unit (CPU) 620, a clock 630, a network interface 640, a graphics interface 650, and a user interface 660. All of these components are interconnected via a data- and communication bus 670. CPU 620 controls the device 60 according to a program that is stored in ROM 600 in a memory zone 601. Clock device 630 provides the components of device 60 with a common timing in order to sequence and synchronize their operation. Network interface 640 receives and transmits data with external devices via connection 6000. Graphics interface 650 is connected to an external rendering device via connection 6001. User interface 660 receives input commands from a user via connection 6002. ROM memory zone 601 comprises instructions that implement the method of the invention. Upon powering on of device 60, CPU 620 copies the program 'Prog' from ROM memory zone 601 into RAM memory zone 611, and executes the copied program. Upon execution of the copied program, the program allocates memory space for variables needed for its execution in RAM memory zone 615, and copies list of device addresses 602, device availability vectors 603, and device sets 604 into respective RAM memories 612-614. The device 60 is now operational and upon reception of a request for storing of a data item, the method of the invention is activated, which method is part of the program stored in ROM 600 memory zone 601. The network interface (640) serves as a receiver for reception of requests to store a data item. The CPU (620) serves among others as a selector for making a first selection of one of the network devices as a reference device. CPU (620) also serves as a selector for a second selection of at least one network device that has an availability over the predetermined time period that is anti-correlated to an availability determined for the reference network device, and CPU (620) serves as a means for adding of the at least one selected network device to the replication set for storing of the data item. ROM memory 600 and RAM memory 610 are storage means for storing of the data item on the network devices in the replication set.

According to a variant embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

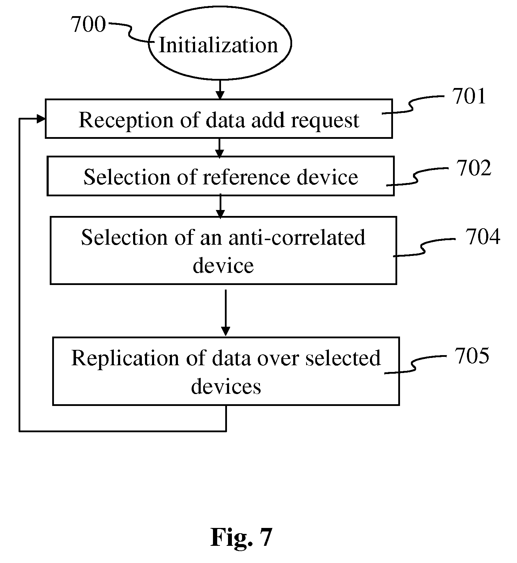

**Figure 7** shows an algorithm of a particular embodiment of the method of the invention, implemented for example by one of the devices 10-16 of figure 1 or by device 60 of figure 6. The algorithm starts with an initialization step 700, in which variables that are used are initialized. Then, in a step 701, a request to store data in the distributed data storage system is received. According to a particular variant embodiment, the request is received by a central server implementing the steps of the invention, such as server 17 of figure 1. This variant embodiment is further referred to as the 'centralized' variant embodiment. According to yet another variant embodiment, the request is received by one of the network devices implementing the invention, for example by any of the network devices 10-16 of figure 1 or by device 60 of figure 6. This variant embodiment is further referred to as the 'decentralized' variant. Then, in a step 702, a selection is done of a network device as a reference device, such a selection of one of the network devices 10-16 of figure 1 or by device 60 of figure 6. According to the variant embodiment, centralized or decentralized, this selection is done either by a centralized server (centralized variant) or by one of the other network devices such as devices 10-16 of figure 1 (decentralized variant). According to a variant embodiment of the decentralized variant, the device receiving the request of step 701 is not the same device as the device selecting the reference device of step 702, when this step is left over to a centralized server, such as server 17 of figure 1. The reference device is selected randomly, or according to a variant embodiment, chosen through a deterministic round robin selection of available devices. Then, in a step 703, a device of which its availability is anti-correlated with that of the reference device is selected from the remaining devices, i.e. the network devices excluding the reference device. For example, if device 10 of figure 1 is the reference device, the remaining devices are devices 11-16. This anti-correlated device (or the more anti-correlated device that could possibly found in the network, because it might be difficult or impossible to find a 'perfect' anti-correlated device) is selected according to availability data known for the network devices. If more than one anti-correlated devices are to be chosen, they are chosen iteratively according to their rank of a list of the more anti-correlated devices with a reference device i. Such availability data represents availability measured for a network device over a certain time period. According to a particular embodiment of the invention, the availability data is obtained by each of the network devices itself. According to a variant embodiment of the invention, the availability data is obtained by a central server from monitoring the availability behavior of the network devices. According to yet another variant of the invention, the availability data is obtained from a centralized server, such as server 17 of figure 1, which collects availability data from the devices, having been measured by the devices themselves. The notion of anti-correlation has already been explained previously. The selected anti-correlated device is added to a set of devices that will be used for storing the data item of the data add request of step 701, also referred to as the replication set. This replication set, being represented by identifiers allowing to address each individual device, such as IP/port addresses, is according to a particular embodiment stored in a centralized server, for example for each particular data item stored in the distributed data storage network an associated replication set is stored, or according to a variant embodiment stored into one of the other network devices, such as the reference device. The replication set is associated to a given data item, in order to be able to determine which devices store a given data item. According to a particular embodiment of the invention, the availability data is stored in the form of a vector, such as vector 24 of figure 2, in which each element represents a unit of time, such as 1h, and where the number of elements of the vector represents a time span, such as 24h. The vector elements are filled with values that indicate if the corresponding device has been unavailable during the corresponding unit of time, for example if vector[5] =+1, the corresponding network device has been available at from 05:00 to 05:59 am, and if vector [11]=-1, the corresponding network device has been unavailable from 11:00 to 11:59 am, or rather according to a variant embodiment previously described, a binary value 1 indicates availability and binary value 0 indicates unavailability. According to a particular embodiment, a threshold is set that allows to set the value of the vector. For example, a threshold is set to half the unit time, and for a device that has been available 20 minutes only, the corresponding element of the vector will be set to a binary value 0 or to the value -1 (according to the chosen variant embodiment 'xor' or 'angle'.

Then, in a step 704, a network device is selected. This selected device is then added to the replication set. The notion of correlation has already been explained previously. In a next step 705, the data item is replicated (copied) to the devices of the replication set, and the algorithm continues with repetition of step 701. In each step 704, k/2 devices are selected for the replication set, while again k/2 correlated devices will be chosen later on (this is the previously described 'group' variant). According to a variant embodiment (the previously described 'patching' variant), one device is selected in each of the step 704, and steps 702-704 are repeated until k devices are selected, so that in both variants, but in a different manner, the desired replication factor is obtained. Each of the 'group' and the 'patching' variant has its own advantages as has been previously discussed.

**Claims**

1. Method of data storing in a distributed data storage system comprising network devices that are at least used as storage devices, **characterized in that** said method comprises the following steps:

   - reception (701) of a request to store a data item in said distributed data storage system;
   - first selection (702) of one of said network devices as a reference device; and
   - second selection (704), of at least one network device that has an availability over a predetermined time period that is anti-correlated to an availability determined for said reference network device, and adding of said at least one selected network device to a set of network devices, referred to as replication set, for storing of said data item; and
   - storage (705) of said data item on the network devices in said replication set.

2. Method according to claim 1, **characterized in that** said method comprises repetition of said first selection step and said second selection step (704) until a number of devices in said replication set is equal or superior to a predetermined replication factor k.

3. Method according to claim 1, **characterized in that** said method comprises a third selection of a network device to be added to said replication set that has an availability over said predetermined time period that is correlated to an availability determined for said reference network device and repetition of said third selection step until a number of devices in said replication set is equal or superior to a predetermined replication factor k.

4. Method according to any of claims 2 or 3, **characterized in that** said availability is stored as a vector (24) of which each element is representative of a unit of time, and where a number of elements of said vector (24) is representative of a time span, and where each element value is representative of an availability during said unit of time of a network device to which said vector (24) is associated, a first predetermined element value being representative of availability, and a second predetermined element value being representative of unavailability.

5. Method according to any of claims 2 or 3, **characterized in that** said first predetermined element value is a positive predetermined value, and said second predetermined value is a negative predetermined value, and said correlation and said anti-correlation are determined according to a calculation of an angle between two of said vectors (24), two vectors (24) being highly correlated when said angle approaches zero, and two vectors (24) being highly anti-correlated when said angle approaches $\pi$, the value of said angle being representative of a level of anti-correlation.

6. Method according to claim 5, where said angle is calculated according to:

$$\theta = \arccos\left(\frac{\vec{x} \cdot \vec{y}}{\|\vec{x}\| \cdot \|\vec{y}\|}\right)$$

where $\theta$ is said angle, and x and y are said two vectors (24).

7. Method according to any of claims 2 or 3, **characterized in that** said first predetermined element value is a binary one, and said second predetermined value is a binary zero, and said correlation and said anti-correlation are determined through a calculation of a logical Boolean XOR operation between two of said vectors (24), two vectors (24) being highly anti-correlated when a result of said logical Boolean XOR operation comprises a high number of 1's that approaches the number of said elements of each of said two vectors (24), and two vectors (24) being highly correlated when said result of said logical Boolean XOR operation comprises a number of 1's that approaches 0, the number of 1's in said result of said Boolean XOR operation being representative of a level of anti-correlation.

8. Method according to any of claims 2 or 3, **characterized in that** said reference device is selected randomly from said network devices.

9. Method according to any of claims 2 or 3, **characterized in that** said reference device is selected deterministically from said network devices.

10. Device for data storing in a distributed data storage system comprising network devices that are at least used as storage devices, **characterized in that** said device comprises the following means:

- a receiver (640) for receiving of a request to store a data item in said distributed data storage system;
- a selector (620) for a first selection (702) of one of said network devices as a reference network device; and
- a selector (620) for a second selection (704), of at least one network device that has an availability over a predetermined time period that is anti-correlated to an availability determined for said reference network device, and means (620) for adding of said at least one selected network device to a set of network devices, referred to as replication set, for storing of said data item; and
- storage means (600, 610) for storing of said data item on the network devices in said replication set.

**Fig. 1**

**Fig. 2**

Fig. 3

Fig. 4

**Fig. 5**

**Fig. 6**

700 —⟨ Initialization ⟩

701 — Reception of data add request

702 — Selection of reference device

704 — Selection of an anti-correlated device

705 — Replication of data over selected devices

**Fig. 7**

Europäisches
Patentamt

European
Patent Office

Office européen
des brevets

# EUROPEAN SEARCH REPORT

**Application Number**

EP 10 30 5999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 073 120 A1 (LUCENT TECHNOLOGIES INC [US]) 24 June 2009 (2009-06-24)<br>* paragraph [0007] - paragraph [0012] *<br>* paragraph [0016] - paragraph [0018] *<br>* paragraph [0025] *<br>* paragraph [0028] - paragraph [0032] *<br>----- | 1-10 | INV.<br>H04L29/08 |
| A | CHANDY J A:  "Storage Allocation in Unreliable Peer-to-Peer Systems", DEPENDABLE SYSTEMS AND NETWORKS, 2006. DSN 2006. INTERNATIONAL CONFERE NCE ON PHILADELPHIA, PA, USA 25-28 JUNE 2006, PISCATAWAY, NJ, USA,IEEE, 25 June 2006 (2006-06-25), pages 227-236, XP010925239, DOI: DOI:10.1109/DSN.2006.67 ISBN: 978-0-7695-2607-2<br>* page 3, left-hand column, paragraph 4 - page 3, right-hand column, paragraph 3 *<br>----- | 1-10 | |

**TECHNICAL FIELDS SEARCHED (IPC)**

H04L

The present search report has been drawn up for all claims

| Place of search | Date of completion of the search | Examiner |
|---|---|---|
| Munich | 2 May 2011 | Zubrzycki, Wojciech |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 30 5999

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2011

| Patent document cited in search report | | | Publication date | Patent family member(s) | | | Publication date |
|---|---|---|---|---|---|---|---|
| EP 2073120 | | A1 | 24-06-2009 | CN | 101465880 | A | 24-06-2009 |
| | | | | WO | 2009077056 | A2 | 25-06-2009 |
| | | | | JP | 2011507114 | T | 03-03-2011 |
| | | | | KR | 20100103610 | A | 27-09-2010 |
| | | | | US | 2009157991 | A1 | 18-06-2009 |

EPO FORM P0459

For more details about this annex : see Official Journal of the European Patent Office, No. 12/82